# FASCICULE DE BREVET EUROPEEN

(11) **EP 3 041 369 B1**
(45) Date de publication et mention de la délivrance du brevet: **12.08.2020**
(21) Numéro de dépôt: 14777689.2
(22) Date de dépôt: 02.09.2014
(51) Int. Cl.: A23L 7/196, A47J 27/00

(54) **PROCEDE DE PRETRAITEMENT DE CEREALES, NOTAMMENT DE RIZ**
VERFAHREN ZUR VORBEHANDLUNG VON GETREIDE, INSBESONDERE REIS
METHOD FOR PRETREATING CEREALS, IN PARTICULAR RICE

(30) Priorité: 03.09.2013 FR 1358421
(43) Date de publication de la demande: 13.07.2016
(73) Titulaire: Rice Technologies, 30800 Saint-Gilles (FR)
(72) Inventeur: BENOIT, Jean-Louis, F-30800 Saint-Gilles (FR)
(74) Mandataire: IP Trust
(86) Numéro de dépôt international: PCT/FR2014/052167
(87) Numéro de publication internationale: WO 2015/033053

(56) Documents cités:
- EP-A1- 1 525 805
- EP-A1- 1 882 479
- WO-A1-99/59418
- WO-A2-2012/056172
- US-A- 3 150 935
- US-A- 5 316 783
- US-A1- 2002 031 596
- US-A1- 2008 220 145
- US-A1- 2013 216 650

## Description

### Domaine de l'invention

La présente invention concerne le domaine du prétraitement des céréales, et en particulier le prétraitement de riz afin d'éviter le phénomène de collage lors de la cuisson, et pour réduire le temps de cuisson.

Il est connu de procéder à un prétraitement du riz brut (paddy) par étuvage, afin de préparer un riz incollable aux qualités nutritionnelles préservées. L'étuvage est un procédé couramment utilisé dans l'industrie du riz qui consiste à précuire le grain de riz par un traitement à la vapeur pour gélatiniser l'amidon. La gélatinisation de l'amidon attribue de nouvelles propriétés au grain qui lui permet de résister à la sur-cuisson (capacité du grain à rester ferme quand le grain est trop cuit) et de ne pas coller (riz incollable).

Le riz « Etuvé » est un riz Paddy ou Cargo (brun) qui a subi, sous pression, un trempage dans l'eau, puis un étuvage à la vapeur, et enfin un séchage. L'amidon est gélatinisé, ce qui rend le grain moins friable. Les vitamines et minéraux des couches externes migrent vers l'amande du grain et le grain est plus solide et donc se brisera moins facilement lors des opérations d'usinage (décorticage, grattage et polissage). Sa coloration est jaune pâle/ambrée, et son temps de cuisson légèrement rallongé. Toutefois ce riz est particulièrement résistant à la surcuisson ; il ne colle donc pas et est qualifié d'« incollable ».

L'étuvage est réalisé sur les lieux de production selon des techniques artisanales. Il a aussi été industrialisé, sous la forme d'équipement et de procédés de trempage à pression atmosphérique, de chaleur sèche ou de traitement par de la vapeur sous pression.

### Etat de la technique

La demande de brevet américain US2002031596 décrit un procédé domestique de préparation de riz brun germé dans un cuiseur à riz de ménage par un traitement par la chaleur humide et le séchage du riz brun germé traitée à une teneur en eau de 10 à 18% en masse et un degré de gélatinisation de 5 à 50%.

Le traitement est réalisé dans un cuiseur vapeur domestique, comprenant un fond rempli d'eau et un panier recevant le riz. La vapeur se forme lors du chauffage du récipient. Ce document de l'art antérieur proposé également un traitement à la vapeur, qui est utilisé dans la production de riz bouilli ou dans l'industrie de fermentation, selon lequel le riz brun soumis à de la vapeur pendant 3 secondes à 30 minutes, de préférence de 10 secondes à 30 minutes dans des conditions de 0,1 à 7,0 kg / cm² de préférence de 0,1 à 2,0 kg / cm².

La demande de brevet US2008220145 de l'art antérieur décrit un procédé de production de riz étuvé qui ne nécessite pas de matériel de traitement des eaux usées et qui enrichit la quantité de l'acide gamma-aminobutyrique contenu dans le riz étuvé.

Le procédé comprend le riz brun matière première partiellement fraisage, en mouillant les grains de riz partiellement broyées par air forcé avec de l'air ou un brouillard humide, l'humidité trempe les grains de riz mouillés, de la vapeur d'ébullition des grains de riz trempé dans l'eau à une pression normale pour chauffer le riz grains avec de la vapeur, de la vapeur d'ébullition des grains de riz chauffé dans le processus de pression de la vapeur d'ébullition normale à l'aide de vapeur sous pression, le refroidissement des grains de riz cuit à la vapeur sous pression dans l'étape de la vapeur à point d'ébullition sous pression pour refroidir au moins une surface des grains de riz, la finition de fraisage les grains de riz refroidi dans l'étape de refroidissement, et le séchage des grains de riz blanchi fini.

Un autre document de l'art antérieur, le brevet américain US5316783 décrit une autre solution de préparation de riz étuvé ayant les propriétés bénéfiques de riz étuvé, tels que la structure intacte de grain et la texture, et ayant une meilleure couleur vis-à-vis d'un riz étuvé typique, et plus encore dans le cas d'un riz brun matériau étant sensiblement de départ sans la saveur étuvé caractéristique et la couleur, et leurs procédés de fabrication.

La demande de brevet US2013216650 décrit un dispositif de vapeur et son procédé d'utilisation. Plus particulièrement, un dispositif de vapeur (généralement un dispositif de vapeur verticale) conçu pour faciliter le chargement et le déchargement de riz, facile, rapide, et efficace tout en assurant une vapeur de qualité pour le riz, similaire aux méthodes traditionnelles saké fumantes.

Le document US2002/0031596 décrit un procédé de prétraitement de céréales, notamment du riz, consistant à injecter dans le récipient une pression de vapeur d'eau à une température de 98-180°C.

### Inconvénient des solutions de l'art antérieur

Les techniques conventionnelles d'étuvage sont cependant très gourmandes en énergie et génèrent un taux de brisure du grain élevé (perte économique conséquente). La gélatinisation de l'amidon entraîne également un allongement du temps de cuisson du grain. La diminution du temps de cuisson peut être réalisée en écrasant légèrement le grain pour induire des micro fissures et faciliter l'infiltration de l'eau lors de la cuisson. Cette technologie, couramment utilisée par les industriels de la filière, produit un fort taux de brisure qui génère une perte économique importante.

Les techniques conventionnelles de production de riz étuvé à cuisson rapide restent très coûteuses à cause des pertes occasionnées par le procédé et la consommation importante en énergie.

Les solutions de l'art antérieur ne sont par ailleurs pas totalement satisfaisantes, car le trempage et le chauffage du riz Paddy provoquent une perte partielle des qualités nutritionnelles et des vitamines et sels minéraux. Par ailleurs, l'étuvage conduit généralement à une légère augmentation du temps de cuisson en raison de la gélatinisation de l'amidon formant à la surface du grain de riz une sorte de coque entourant l'amande du grain.

Les solutions de l'art antérieur de cuisson vapeur ne sont pas satisfaisantes car elles aboutissent à un riz de type riz bouilli.

### Solution apportée par l'invention

La présente invention vise à remédier à ces inconvénients en proposant un procédé permettant de concilier l'étuvage et la réduction du temps de cuisson, en évitant les inconvénients de déstructuration résultant de l'application d'une détente instantanée, et produisant sur les grains un « stress » thermique, mécanique et humide par une variation maîtrisée des conditions de pression et température de la vapeur d'eau injectée ou retirée de l'autoclave.

A cet effet, l'invention concerne selon son acception la plus générale un procédé de prétraitement de céréales, notamment de riz, consistant à introduire d'abord les céréales à température et pression ambiante dans un autoclave, à injecter dans l'autoclave une vapeur d'eau à une température comprise entre 140°C et 190°C, à une pression comprise entre 6 et 10 bars, et de préférence supérieure à 7 bars, à maintenir cette pression pendant une durée d'environ 20 secondes, et plus généralement comprise entre 5 et 40 secondes, puis à ouvrir une vanne d'échappement de la vapeur, puis à appliquer une dépression dans l'enceinte de l'autoclave pendant une durée comprise entre 10 et 90 secondes.

Les céréales sont ainsi soumises à des variations de pression, humidité et température selon une séquence spécifique:
A. les céréales sont introduites dans un autoclave, à pression, hygrométrie et température ambiantes
B. l'autoclave est fermé après remplissage de céréales
C. les céréales subissent un cycle de traitement consistant
   a. on injecte dans l'autoclave fermé comprenant au moins un conduit d'arrivée de vapeur
      i. une pression de vapeur d'eau à une température comprise entre 140°C et 190°C,
      ii. à une pression comprise entre 6 et 10 bars,
   b. Cette pression et cette température sont maintenues pendant une durée comprise entre 10 secondes et 90 secondes,
   c. on ouvre ensuite une vanne d'échappement de la vapeur de l'autoclave pour permettre un retour vers les conditions de pression, hygrométrie et température ambiantes.

Dans la présente invention 1 bar=100 kPa. L'invention se distingue en particulier par un cycle de variation de pression, (pression ambiante puis montée de la pression, puis maintien en palier de cette pression, puis dépression.

Selon l'invention, les céréales sont introduites sans trempage préalable dans un autoclave hermétique.

Ils subissent avantageusement une étape préalable de mise sous vide afin d'atteindre une pression inférieure à 500 millibars dans l'autoclave.

Avantageusement, le cycle de traitement consiste à :
- appliquer une mise sous vide dans l'enceinte de l'autoclave afin d'atteindre une pression d'environ 500 millibars, puis
- à injecter dans l'autoclave une vapeur d'eau à une température comprise entre 140°C et 190°C, à une pression comprise entre 6 et 10 bars, et de préférence supérieure à 7 bars,

- à maintenir cette pression pendant une durée d'environ 20 secondes et plus généralement comprise entre 5 et 40 secondes
- puis à ouvrir une vanne d'échappement de la vapeur
- puis à appliquer une mise sous vide dans l'enceinte de l'autoclave.

Le traitement sous pression selon l'invention est moins gourmand en énergie et abîme beaucoup moins le grain (3% de brisures au lieu de 12%). En conséquent, le coût de revient de l'étuvage est bien inférieur à celui des techniques connues dans l'art antérieur. Par ailleurs, les techniques classiques permettant la microfissuration des grains pour diminuer leur temps de cuisson affectent négativement l'aspect visuel du grain (grain écrasé). Le procédé selon l'invention permet de réduire le temps de cuisson sans toucher à l'intégrité physique du grain. Enfin, ce procédé est très flexible et permet de produire du riz sur mesure en fonction du cahier des charges des utilisateurs.

Avantageusement, le procédé comporte une étape additionnelle consistant en un séchage pour ramener l'humidité du grain à un taux d'environ 14%.

Selon une variante, le procédé comporte une injection d'une substance aromatique lors de l'étape d'injection de vapeur.

### Description détaillée d'un exemple non limitatif de réalisation de l'invention

La présente invention sera mieux comprise à la lecture de la description qui suit, concernant un exemple non limitatif de réalisation se référant aux dessins annexés où :

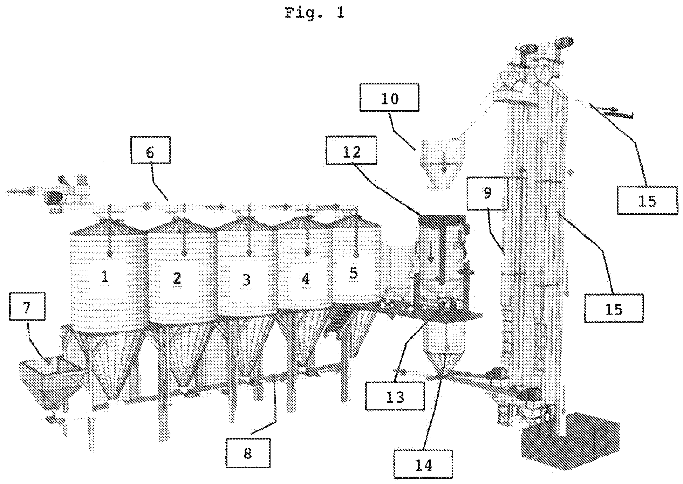

- la figure 1 représente une vue schématique d'une installation utilisée pour le procédé de prétraitement de riz selon l'invention
- la figure 2 représente une vue schématique détaillée de l'autoclave et des équipements complémentaires pour la mise en œuvre du procédé de l'invention

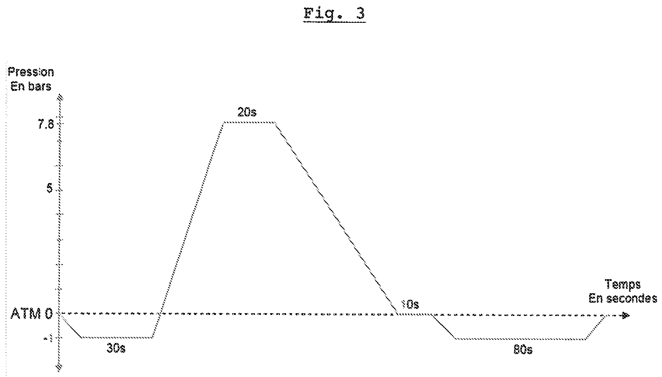

- la figure 3 représente la courbe de pression en fonction du temps, pour un cycle de prétraitement.

### Description générale d'un exemple de réalisation

L'invention est mise en œuvre par une installation destinée à structurer les céréales en se basant sur un traitement de pression de vapeur.

Cette installation comprend un autoclave hermétique dans lequel les céréales subissent une transformation physico-chimique par un traitement thermodynamique.

L'autoclave contient un panier micro-perforé permettant de contenir la céréale sans que celle-ci ne touche les parois de l'enceinte de l'autoclave tout en laissant passer la pression de vapeur pour qu'elle fasse effet sur la céréale.

L'autoclave contient au moins une ouverture permettant de faire entrer et sortir le produit.

Optionnellement, il contient deux ouvertures, l'une sur la partie supérieure permettant de faire rentrer le produit dans le panier et l'autre sur la partie inférieure, permettant de faire ressortir le produit après le traitement de pression de vapeur.

Le panier est ouvert sur sa partie supérieure pour permettre au produit de rentrer à l'intérieure et ouvert sur sa partie inférieure pour permettre sa sortie. L'ouverture de la partie inférieure du panier peut être fermé par une vanne afin de maintenir le produit pendant le traitement et de le faire sortir à la fin du traitement.

Le panier peut contenir un système de tuyauterie à l'intérieur pour faciliter la pénétration de la vapeur dans le produit.
L'autoclave peut être fermé de manière hermétique de sorte de pouvoir créer une pression de vapeur à l'intérieur de son enceinte.

Dans le cadre de l'invention, le panier est allongé et positionné en position verticale pour permettre d'accumuler du produit gravitairement par le haut et de faciliter la vidange vers le bas.

Le panier épouse la forme de l'intérieur de l'autoclave pour optimiser l'espace et le traitement thermique.

L'autoclave possède des ouvertures permettant l'entrée de la pression avec un débit suffisant pour que l'augmentation de la pression soit conforme aux cycles présenté plus en détail dans ce qui suit. Il contient également des ouvertures permettant de casser la pression vers une bombonne de vide ou vers l'atmosphère également avec un débit suffisant pour que la diminution de la pression soit conforme aux revendications.

L'autoclave possède des ouvertures au niveau bas de l'enceinte pour permettre l'évacuation des condensats pendant et après le traitement. Ces ouvertures sont contrôlées par des électrovannes.

L'enceinte de l'autoclave doit résister à une pression négative vers le vide.

Le procédé technologique est basé sur une succession d'étapes :
- Alimentation avec les céréales à travers l'ouverture supérieure du réacteur pour remplir le panier interne qui épouse la forme de l'enceinte.
- Fermeture du réacteur de manière à ce que l'autoclave soit hermétique.
- De réaliser un vide primaire dans l'enceinte par aspiration de l'air interne.
- Montée en pression de vapeur pour atteindre une pression de 6 à 10 bars, et de préférence supérieure à 7 bars avec une température comprise entre 140°C (pour une pression d'environ 7 bars) et 190°C (pour une pression d'environ 10 bars)
- Maintien en plateau à la pression visée, pendant une durée préférentiellement d'une vingtaine de secondes, et en général entre 5 et 40 secondes
- Retour à la pression atmosphérique en dégazant la pression de vapeur vers l'atmosphère
- Mise sous au vide
- Retour à la pression atmosphérique
- Ouverture inférieure du réacteur pour permettre l'évacuation du produit
- Renouvellement de l'opération de manière cyclique

### Description d'un exemple spécifique de réalisation

L'installation est constituée par une série de cellules de stockage (1 à 5) de riz Paddy alimentées par une rampe d'alimentation (6).

Elle comprend également une trémie (7) permettant l'approvisionnement à partir de sources externes (sacs de riz, vrac...), pour le traitement d'une quantité spécifique de riz ne justifiant pas le stockage dans une cellule.

Les cellules de stockage (1 à 5) sont équipées de sondes thermométriques et d'une ventilation forcée par des ventilateurs permet d'abaisser progressivement la température du grain jusqu'à obtenir une température inférieure à 10°, avec une humidité inférieure à 15% garantissent la non éclosion d'insectes.

En amont de ces cellules, l'installation peut comporter un équipement de triage par criblage, ventilation et densimétrie. Un jeu de grilles à trous sur un plan incliné est fixé sur un support animé d'un mouvement de va et vient en rotation. Le choix du diamètre du trou des grilles permet d'éliminer les particules plus grosses (grilles supérieures) et les particules plus fines (grilles inférieures).

Deux lignes de triages indépendantes alimentent les deux séchoirs. L'installation permet donc de traiter simultanément deux familles de produits sans les mélanger. Chaque ligne comprenant un triage avant et après séchoir, a une capacité de 20 tonnes/heure suivant la propreté du produit rentré.

Les trappes à crémaillères disposées sous les cônes des cellules de stockage (1 à 5) permettent de régler les débits de passage dans les installations. Le tout est asservi par un automate électronique centralisant les informations matérialisées sur un synoptique dans la salle de commande du silo.

Les cellules de stockage (1 à 5) et la trémie (7) débouchent par l'intermédiaire d'une trappe commandée sur un tapis transporteur (8) acheminant le riz jusqu'à une colonne (9) équipée d'une vis sans fin pour transporter le riz non traité jusqu'à une trémie (10) alimentant l'autoclave (11). Cet autoclave (11) comporte une ouverture (12) pour l'alimentation en riz non traité. Lorsque l'autoclave est chargé, cette ouverture est fermée de manière étanche pendant tout le cycle de traitement.

L'alimentation de l'autoclave (11) se fait avec du riz à température ambiante, à hygrométrie ambiante ou à la température et l'hygrométrie de stockage, inférieure à la température ambiante.

Une fois que l'autoclave est chargé, on procède comme déjà exposé à l'injection de vapeur d'eau dans le volume de riz préalablement chargé dans l'autoclave.

A la fin du cycle, le riz traité est évacué par gravité par une trappe (13) prévue dans la partie inférieure de l'autoclave (11) et débouchant dans une trémie (14) jusqu'à un tapis transporteur (15) transportant le riz traité jusqu'à une deuxième colonne (16) débouchant dans un séchoir (15).

Une trémie supérieure alimente des colonnes de séchage dans lesquelles le riz descend gravitairement. Au cours de sa descente le riz est exposé à une ventilation d'air chaud. Au pied de la colonne une vis extractrice à vitesse de rotation réglable permet de régler le temps de passage dans le séchoir. Le riz passe successivement dans deux colonnes avant de sortir du séchoir. L'ensemble des colonnes est habillé de tôles de manière à emprisonner l'air pulsé et de le canaliser vers une chambre de décompression où il décante ses poussières avant d'être rejeté dans l'atmosphère.

L'air ambiant aspiré par deux gros ventilateurs traverse un four au gaz à flammes directes avant d'être pulsé dans le séchoir. Le débit d'air est constant, le réglage des températures est obtenu en intervenant sur les brûleurs. Le conducteur de silo sous le contrôle du responsable de production procède au réglage des températures et des débits des séchoirs afin d'obtenir le taux d'humidité nécessaire à une bonne conservation du produit. A intervalle régulier, un échantillon est pris à la sortie du séchoir et contrôlé au laboratoire.

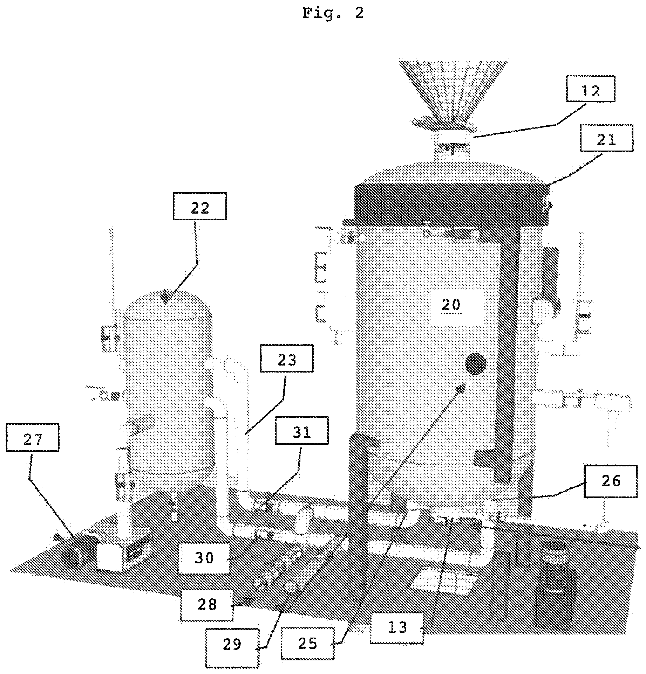

La figure 2 représente une vue détaillée de l'autoclave (11).

Il est constitué par une enceinte métallique (20) fermée par un couvercle (21) présentant une ouverture (12) pour l'alimentation en riz non traité. A l'intérieur de cette enceinte, le riz est maintenu dans un panier micro-perforée permettant le passage de la vapeur, et évitant le contact direct entre le riz et l'enceinte métallique.

Pour le traitement de volumes compris entre 200 et 800 kg de riz, le volume de l'enceinte est d'environ 2 m². L'autoclave est relié à un réservoir de vide (22) par deux conduits (23, 24) débouchant dans l'enceinte (20) par deux piquages (25, 26). Le volume du réservoir de vide est d'environ 2 à 4 fois supérieur au volume de l'autoclave, par exemple de 7 m² pour un autoclave de 2m².

Ce réservoir de vide est relié à une pompe à vide (27).

Le riz traité est évacué par une trappe (12).

L'autoclave est par ailleurs relié à des conduits d'arrivée de vapeur (28, 29).

Le traitement consiste à remplir l'autoclave avec une quantité de riz non traité.

L'enceinte (20) est ensuite fermée de manière étanche, et on ouvre les vannes (30, 31) afin de mettre en connexion le réservoir de vide (22) et l'autoclave (20).

Ceci conduit à une mise sous vide de l'enceinte (20), qui passe de la pression atmosphérique à une pression d'environ 0,5 à 0,05 bars en une dizaine de secondes.

Lorsque la dépression atteint un pallier, les vannes (30, 31) sont refermées.

Après une trentaine de secondes de dépression, on injecte un vapeur d'eau à une température de 140°C à 190°C et à une pression de 6 à 10 bars. La pression est maintenue pendant une vingtaine de seconde, puis on ouvre un échappement (32, 33) ramenant la pression à l'intérieure de l'enceinte (20) à la pression atmosphérique.

Après un pallier d'une dizaine de secondes, on applique à nouveau une mise sous vide en ouvrant à nouveau les vannes (30, 31) afin de relier l'autoclave au réservoir de vide (22) qui a été entretemps remis en dépression par la pompe à vide (27). Cette dépression d'environ 0,5 à 0,05 bar est atteinte en une dizaine de secondes puis maintenue pendant 80 secondes environ, puis on ouvre l'échappement pour remettre l'enceinte à la pression atmosphérique.

Le contenu de l'enceinte (20) est ensuite transféré vers un séchoir formé par un lit fluidisé ou un séchoir vertical, pour faire passer l'humidité d'un taux de 19 à 22% à la sortie de l'autoclave à un taux d'humidité d'environ 14% en une heure.

Optionnellement, le circuit d'injection de vapeur comporte un piquage pour l'injection d'une substance aromatique, par exemple une huile parfumée pulvérisée ou des arômes naturels ou artificiels.

## Revendications

1. Procédé de prétraitement de céréales, notamment du riz, comprenant une étape d'introduction des céréales au préalable dans un autoclave et une étape dans laquelle lesdites céréales subissent dans ledit autoclave fermé un cycle de traitement consistant à injecter dans l'autoclave une pression de vapeur d'eau à une température comprise entre 140°C et 190°C, à une pression comprise entre 6 et 10 bars, à maintenir cette pression pendant une durée comprise entre 10 secondes et 90 secondes, puis à ouvrir une vanne d'échappement de la vapeur, **caractérisé en ce que** lesdites céréales introduites dans l'autoclave sont des céréales non traitées, à température et hygrométrie ambiantes et n'ayant pas subi de trempage préalable, le procédé comportant en outre une étape additionnelle consistant à appliquer une dépression dans l'enceinte de l'autoclave pendant une durée supérieure à 10 secondes.

2. Procédé de prétraitement de céréales, notamment du riz, selon la revendication 1, **caractérisé en ce qu'**il comporte une étape initiale consistant à appliquer une mise sous vide afin d'atteindre une pression inférieure à 500 millibars dans l'autoclave.

3. Procédé de prétraitement de céréales, notamment du riz, selon la revendication 1, **caractérisé en ce que** l'étape consistant à appliquer une dépression dans l'enceinte de l'autoclave après l'échappement de la vapeur présente une durée inférieure à 90 secondes.

4. Procédé de prétraitement de céréales, notamment du riz, selon la revendication précédente **caractérisé en ce que** le cycle de traitement consiste à :
- appliquer une dépression afin d'atteindre une pression d'environ 500 millibars dans l'autoclave, puis
- à injecter dans l'autoclave une vapeur d'eau à une température comprise entre 140°C à 190°C à une pression comprise entre 6 et 10 bars,
- à maintenir cette pression pendant une durée comprise entre 5 et 40 secondes
- puis à ouvrir une vanne d'échappement de la vapeur
- puis à appliquer une mise sous vide dans l'enceinte de l'autoclave.

5. Procédé de prétraitement de céréales, notamment du riz, selon l'une au moins des revendications précédentes **caractérisé en ce qu'**il comporte une étape additionnel des céréales sortant dudit autoclave, consistant en un séchage pour ramener l'humidité à un taux d'environ 14%.

6. Procédé de prétraitement de céréales, notamment du riz, selon l'une au moins des revendications précédentes **caractérisé en ce qu'**il comporte une injection d'une substance aromatique lors de l'étape d'injection de vapeur.

7. Application du procédé selon les revendications précédentes au prétraitement de riz paddy ou cargo.

## Patentansprüche

1. Verfahren zur Vorbehandlung von Getreide, insbesondere Reis, umfassend einen Schritt des vorherigen Einbringens des Getreides in einen Autoklaven und einen Schritt, in dem das Getreide in dem geschlossenen Autoklaven einen Behandlungszyklus durchläuft, der darin besteht, in den Autoklaven einen Wasserdampfdruck bei einer Temperatur zwischen 140 °C und 190 °C und bei einem Druck zwischen 6 und 10 bar einzupressen, diesen Druck für eine Dauer zwischen 10 Sekunden und 90 Sekunden aufrechtzuerhalten, danach ein Dampfauslassventil zu öffnen, **dadurch gekennzeichnet, dass** das in den Autoklaven eingebrachte Getreide unbehandeltes Getreide bei Raumtemperatur und - feuchtigkeit ist und zuvor nicht eingeweicht wurde, wobei das Verfahren ferner einen zusätzlichen Schritt umfasst, der darin besteht, in der Kammer des Autoklaven für eine Dauer von mehr als 10 Sekunden einen Unterdruck anzuwenden.

2. Verfahren zur Vorbehandlung von Getreide, insbesondere Reis, nach Anspruch 1, **dadurch gekennzeichnet, dass** es einen Anfangsschritt umfasst, der darin besteht, ein Vakuum anzuwenden, um einen Druck von weniger als 500 Millibar im Autoklaven zu erreichen.

3. Verfahren zur Vorbehandlung von Getreide, insbesondere Reis, nach Anspruch 1, **dadurch gekennzeichnet, dass** der Schritt, der darin besteht, in der Kammer des Autoklaven nach dem Entweichen des Dampfes einen Unterdruck anzuwenden, eine Dauer von weniger als 90 Sekunden hat.

4. Verfahren zur Vorbehandlung von Getreide, insbesondere Reis, nach dem vorhergehenden Anspruch, **dadurch gekennzeichnet, dass** der Behandlungszyklus darin besteht,
- einen Unterdruck anzuwenden, um im Autoklaven einen Druck von ungefähr 500 Millibar zu erreichen, dann
- Wasserdampf bei einer Temperatur zwischen 140 °C und 190 °C bei einem Druck zwischen 6 und 10 bar in den Autoklaven einzupressen,
- diesen Druck für eine Dauer zwischen 5 und 40 Sekunden aufrechtzuerhalten,
- danach ein Dampfauslassventil zu öffnen,
- dann ein Vakuum an die Kammer des Autoklaven anzuwenden.

5. Verfahren zur Vorbehandlung von Getreide, insbesondere Reis, nach mindestens einem der vorhergehenden Ansprüche, **dadurch gekennzeichnet, dass** es einen zusätzlichen Schritt für das den Autoklaven verlassende Getreide umfasst, der in einer Trocknung besteht, um die Feuchtigkeit auf einen Anteil von ungefähr 14 % zu reduzieren.

6. Verfahren zur Vorbehandlung von Getreide, insbesondere Reis, nach mindestens einem der vorhergehenden Ansprüche, **dadurch gekennzeichnet, dass** es ein Einpressen einer aromatischen Substanz während des Dampfeinpressschritts umfasst.

7. Anwendung des Verfahrens nach den vorhergehenden Ansprüchen bei der Vorbehandlung von Rohreis oder geschältem Reis.

## Claims

1. Method for the pretreatment of cereals, in particular rice, comprising a step of introducing the cereals beforehand into an autoclave and a step in which said cereals undergo, in said closed autoclave, a treatment cycle consisting in injecting, into the autoclave, pressurized water vapor at a temperature of between 140°C and 190°C, at a pressure of between 6 and 10 bar, in maintaining said pressure for a duration of between 10 seconds and 90 seconds, then in opening a vapor exhaust valve, **characterized in that** said cereals introduced into the autoclave are untreated cereals, at ambient temperature and hygrometry and that have not undergone prior soaking, the method further comprising an additional step consisting in applying a negative pressure in the chamber of the autoclave for a duration of greater than 10 seconds.

2. Method for the pretreatment of cereals, in particular rice, according to claim 1, **characterized in that** it comprises an initial step consisting in applying a vacuum in order to reach a pressure of less than 500 millibar in the autoclave.

3. Method for the pretreatment of cereals, in particular rice, according to claim 1, **characterized in that** the step consisting in applying a negative pressure in the autoclave chamber after the vapor has escaped has a duration of less than 90 seconds.

4. Method for the pretreatment of cereals, in particular rice, according to the preceding claim, **characterized in that** the treatment cycle consists in:
- applying a negative pressure in order to reach a pressure of approximately 500 millibar in the autoclave, then
- injecting, into the autoclave, water vapor at a temperature of between 140°C to 190°C at a pressure of between 6 and 10 bar,
- maintaining said pressure for a duration of between 5 and 40 seconds
- then opening a vapor exhaust valve
- then applying a vacuum in the autoclave chamber.

5. Method for the pretreatment of cereals, in particular rice, according to at least one of the preceding claims, **characterized in that** it comprises an additional step of the cereals leaving said autoclave, consisting in drying to bring the moisture to a level of approximately 14%.

6. Method for the pretreatment of cereals, in particular rice, according to at least one of the preceding claims, **characterized in that** it comprises an injection of an aromatic substance during the vapor injection step.

7. Application of the method according to the preceding claims to the pretreatment of paddy or cargo rice.
